# EUROPÄISCHE PATENTSCHRIFT

(11) **EP 1 103 010 B1**
(45) Veröffentlichungstag und Bekanntmachung des Hinweises auf die Patenterteilung: **26.03.2003**
(21) Anmeldenummer: 99945922.5
(22) Anmeldetag: 05.07.1999
(51) Int. Cl.: G02B 6/24, G02B 6/38, G02B 6/255

(54) **VORRICHTUNG ZUM TEMPORÄREN LAGEDEFINIERTEN FIXIEREN VON LICHTLEITERENDEN**
DEVICE FOR TEMPORARILY FIXING OPTICAL WAVEGUIDE ENDS IN A POSITION-DEFINED MANNER
DISPOSITIF POUR FIXER DE MANIERE TEMPORAIRE DES EXTREMITES DE FIBRES OPTIQUES, DANS UNE POSITION DEFINIE

(30) Priorität: 06.08.1998 DE 19835642
(43) Veröffentlichungstag der Anmeldung: 30.05.2001
(73) Patentinhaber: SIEMENS AKTIENGESELLSCHAFT, 80333 München (DE)
(72) Erfinder: BRUGGER, Rudolf, D-82178 Puchheim (DE); KRAUSE, Dieter, D-82446 Uffing am Staffelsee (DE)
(86) Internationale Anmeldenummer: DE9902084
(87) Internationale Veröffentlichungsnummer: WO00008497

(56) Entgegenhaltungen:
- EP-A- 0 211 221
- EP-A- 0 340 867
- EP-A- 0 475 474
- US-A- 5 318 419

## Beschreibung

Die Erfindung bezieht sich auf eine Vorrichtung zum temporären lagedefinierten Fixieren von Lichtleiterenden in einer Klemmeinrichtung zur anschließenden Weiterbearbeitung der Lichtleiterenden in einem Bearbeitungswerkzeug gemäß dem Oberbegriff des Patentanspruchs 1.

Aus EP 0 475 474 A1 ist bekannt, daß vor dem Zusammenspleißen von zwei Lichtleiterenden die beiden Lichtleiterenden zum Verringern der optischen Zusatzverluste zueinander genau justiert werden müssen. Da die Justage von einzelnen Lichtleiterenden sehr zeit-intensiv ist, werden dabei mehrere Lichtleiterenden gleichzeitig zueinander justiert. Dabei werden entweder Faserbündel verwendet, in denen einzelne Lichtleiterenden parallel zueinander fest angeordnet sind, oder einzelne Lichtleiterenden werden vor dem Verspleißen in einer Ebene parallel zueinander ausgerichtet. Durch den vorgegebenen Manteldurchmesser von 250 µm für die einzelne Lichtleiter ergibt sich ein entsprechender Abstand der einzelnen Lichtleiter untereinander. Nach dem Ausrichten werden die Lichtleiterenden in einer Klemmeinrichtung fixiert. Diese Klemmeinrichtung wird dann in eine Spleißvorrichtung eingelegt, und ebenso wird eine zweite Gruppe von Lichtleiterenden in einer zweiten Klemmeinrichtung präpariert, die ebenfalls in die Spleißeinrichtung eingelegt wird. Anschließend wird die größere Anzahl von parallel zueinander ausgerichteten Lichtleiterenden gemeinsamen justiert und gemeinsam gespleißt. Damit einheitliche Klemmeinrichtungen für eine unterschiedliche Anzahl von Lichtleiterenden verwendet werden können, ist die Position der parallel zueinander ausgerichteten Lichtleiterenden in den Klemmeinrichtungen an die Anzahl der Lichtleiterenden anzupassen. Bekannt sind dafür aufwendig konstruierte Sortiervorrichtungen, die für die verschiedenen Einlegpositionen der zueinander positionierten Lichtleiterenden einen Kugelführungsschlitten mit einer Mikrometerschraube vorsehen.

Aus EP 0 340 867 A2 ist ein Verfahren zum Einbringen einer Mehrzahl von Lichtwellenleitern in eine Klemmzwinge bekannt, zwischen deren Klemmbacken die Lichtwellenleiter nebeneinander in einer Ebene eingeklemmt werden. Dabei wird die Klemmzwinge mittels Formschlußelementen an einem Gehäusekörper zwischen zwei Sortiergabeln derart angelegt, daß Einführungskanäle der Sortiergabeln mit einem Aufnahmekanal der Klemmzwinge fluchten. Danach werden die Lichtwellenleiter in die Sortiergabeln und den zunächst durch Lösen der Klemmbacken erweiterten Aufnahmekanal eingelegt und die Lichtwellenleiter mittels einer in die Einführungskanäle und/oder den Aufnahmekanal eingeführten Schiebefolie aneinander gedrückt. Dadurch wird eine Klemmung der Klemmbacken bewirkt. Schließlich wird die Klemmzange mitsamt den eingelegten Lichtwellenleitern aus der Sortiervorrichtung entnommen.

Es ist die Aufgabe der Erfindung, eine Vorrichtung zum temporären lagedefinierten Fixieren von Lichtleiterenden in einer Klemmeinrichtung zur anschließenden Weiterbearbeitung der Lichtleiterenden in einem Bearbeitungswerkzeug anzugeben, die einfach konstruiert ist und einfach zu bedienen ist.

Zur Lösung der Aufgabe dient eine Vorrichtung mit den kennzeichnenden Merkmalen des Patentanspruchs 1.

Dabei ist vorgesehen, daß die Klemmeinrichtung in eine Aufnahme der Fixiereinrichtung einsetzbar ist und die Fixiereinrichtung und die Aufnahme einander zugeordnete und aneinander anschlagbare Zentriermittel aufweisen. Dabei sind schnellwechselbare Aufnahmen für eine unterschiedliche Anzahl von Lichtleiterenden vorgesehen, wobei die unterschiedlichen Aufnahmen Anschlagmittel aufweisen, die in ihrer zu den Lichtleiterenden transversalen Lage stufenweise variieren. Dadurch lassen sich je nach Anzahl der zu fixierenden Lichtleiterenden die entsprechenden Aufnahmen auswählen und schnell in die Aufnahme der Fixiereinrichtung einlegen.

Besonders vorteilhaft ist die Vereinigung von verschiedenen Aufnahmen in einem Zentrierkörper, der in unterschiedlichen Drehlagen in die Fixiereinrichtung einsetzbar ist gemäß Patentanspruch 2. Der Zentrierkörper kann bis zu acht unterschiedliche Drehlagen einnehmen und damit bis zu acht unterschiedliche Aufnahmen bereitstellen. Damit entfällt eine aufwendige Aufbewahrung unterschiedlicher Aufnahmen.

In vorteilhafter Weise weist die Vorrichtung gemäß Anspruch 3 einen Faserführungsschlitz auf, in den ein zugeordneter Faserschieber einführbar ist, um die Lichtleiterenden parallel in einer Ebene und eng benachbart zueinander auszurichten.

Zur einfachen Bedienung der Vorrichtung ist gemäß Anspruch 4 ein Sortierkamm vorgesehen, der zwischen zwei Positionen drehbar gelagert ist, so daß in einer ersten Position die Fasern im Faserführungsschlitz fixiert werden und in der zweiten Position in der Klemmeinrichtung geklemmt werden.

Anhand der Figuren der Zeichnung wird die Erfindung an einem Ausführungsbeispiel näher erläutert.

Dabei zeigen
Figur 1 eine Schrägansicht der erfindungsgemäßen Vorrichtung und
Figur 2 eine schematische Seitenansicht eines Zentrierkörpers.

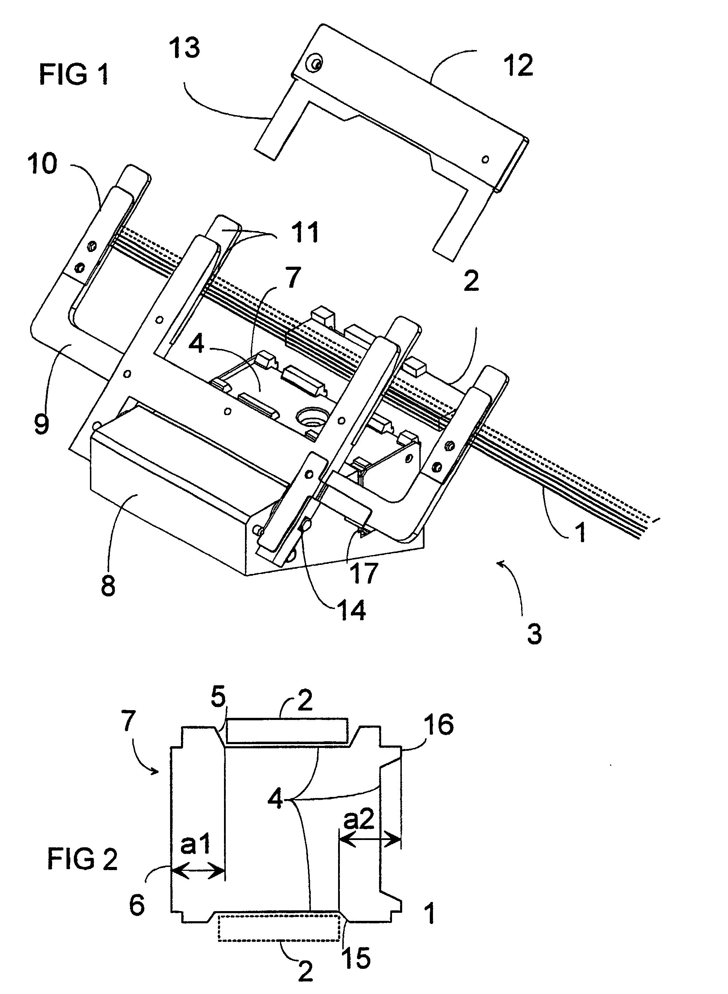

In Figur 1 ist dargestellt, wie - in diesem Beispiel vier - Lichtleiterenden 1 parallel zueinander ausgerichtet und auf einer Klemmeinrichtung 2 geklemmt werden. Die Lichtleiterenden können dabei beispielsweise Glasfasern oder Kunststofffasern sein. Gestrichelt sind weitere Lichtleiterenden 1 angedeutet, die darauf hinweisen, daß eine unterschiedliche Anzahl von Lichtleiterenden mit der erfindungsgemäßen Vorrichtung fixiert werden können. Die Klemmeinrichtung 2 weist auf ihrer Oberseite nicht dargestellte V-Nuten im Rastermaß von 250 µm auf, damit die zu klemmenden Lichtleiterenden parallel zueinander und eng benachbart in der Klemmeinrichtung geklemmt werden.

Die Klemmeinrichtung 2 wird auf einer Aufnahme 4 in der Fixiereinrichtung 3 angebracht. Wie in Figur 2 dargestellt ist, sind die Aufnahmen 4 in Form eines Zentrierkörpers 7 angeordnet. Die Klemmeinrichtung 2 wird dabei durch am Zentrierkörper 7 angeordnete Anschlagmittel 5, 15 gehalten. Die Position des Zentrierkörpers 7 zur Fixiereinrichtung 3 wird durch Zentriermittel 6, 16 am Zentrierkörper und Zentriermittel 17 der Fixiereinrichtung 3 bestimmt. Im dargestellten Beispiel liegen die jeweiligen Zentriermittel 6,17 aneinander an. Der quaderförmige Zentrierkörper 7 ist so aufgebaut, daß die einzelnen Aufnahmen 4 so angeordnet sind, daß die jeweils zugeordneten Anschlagmittel 5,15 zu den jeweils zugeordneten Zentriermitteln 6,16 unterschiedliche Abstände a1, a2 aufweisen. Der Zentrierkörper 7 läßt sich nun in unterschiedlichen Positionen in der Fixiereinrichtung 3 befestigen. Durch die stufenweise unterschiedlichen Abstände a1, a2 wird sichergestellt, daß die Lichtleiterenden 1 selbst bei einer unterschiedlichen Anzahl von Lichtleiterenden 1 in den mittleren V-Nuten der Klemmeinrichtung 2 geklemmt werden.

Im dargestellten Beispiel wird eine Klemmeinrichtung 2 an einem ersten Anschlagmittel 5 gehalten und dieses Anschlagmittel 5 weist einen Abstand a1 zum ersten Zentriermittel 6 auf. Wird der Zentrierkörper 7 nun beispielsweise um 180° um seine Längsachse gedreht in die Fixiereinrichtung 3 eingebaut, so wird die Klemmeinrichtung 2 (gestrichelt dargestellt) an einem zweiten Anschlagmittel 15 gehalten, welches einen Abstand a2 zum zweiten Zentriermittel 16 aufweist. Durch eine entsprechende Anordnung der Zentrier- und Anschlagmittel des quaderförmigen Zentrierkörpers lassen sich somit bis zu acht unterschiedliche Abstände a1, a2 realisieren. Der Zentrierkörper wird dabei jeweils um seine Längsausrichtung um 90° bzw. um eine dazu senkrecht stehende Querachse um 180° gedreht. Im dargestellten Beispiel in Figur 2 sind insgesamt sechs verschiedene Abstände realisiert, um beispielsweise zwei, vier, sechs, acht, zehn und zwölf Lichtleiterenden zu fixieren.

Das Verfahren zum temporären lagedefinierten Fixieren läuft dann folgendermaßen ab. Zunächst wird je nach Anzahl der zu fixierenden Lichtleiterenden 1 die gewünschte Position des Zentrierkörpers 7 ermittelt und der Zentrierkörper 7 in die Fixiereinrichtung 3 entsprechend eingebaut. Anschließend wird die für eine unterschiedliche Anzahl von Lichtleiterenden 1 einheitliche Klemmeinrichtung 2 in die Aufnahme 4 des Zentrierkörpers 7 eingelegt. Die zu fixierenden Lichtleiterenden 1 werden in eine Faserklemme 10 geklemmt und in einen Faserführungsschlitz 11 der Fixiereinrichtung 3 eingeführt. Damit die einzelnen Lichtleiterenden 1 parallel zueinander eng benachbart ausgerichtet sind, wird in den Faserführungsschlitz 11 ein Schieber 13 eines Faserschiebers 12 eingeführt. Der Faserschieber 12 wird dabei magnetisch vom Sortierkamm 9 angezogen, wobei der Schieber 13 gefedert die Lichtleiterenden 1 andrückt. Anschließend wird der Sortierkamm 9 um ein Drehlager 14 gedreht, so daß die fixierten Lichtleiterenden 1 auf der Klemmeinrichtung 2 in den nicht dargestellten V-Nuten zu liegen kommen. Dort werden die Lichtleiterenden 1 geklemmt. Anschließend werden die Faserklemmen 10 geöffnet, der Faserschieber 12 herausgezogen, der Sortierkamm 9 nach oben geschwenkt und die Klemmeinrichtung 2 läßt sich mit den geklemmten Lichtleiterenden 1 entnehmen.

Die geklemmten Lichtleiterenden 1 können dann gemeinsam weiterbehandelt werden. Beispielsweise können sie in unterschiedlichen Bearbeitungswerkzeugen eingelegt und je nach Bearbeitungswerkzeug gemeinsam auf eine gemeinsame Länge gebracht werden, der Mantel entfernt werden und gemeinsam zu einem anderen, entsprechend vorbereiteten Faserbündel justiert und anschließend mit diesem zweiten Faserbündel verschweißt werden.

Anstelle von einzelnen Lichtleiterenden 1 ist die Vorrichtung auch zum temporären lagedefinierten Fixieren von Lichtleiterbündeln (Faserbündel) mit - in diesem Beispiel - bis zu zwölf einzelnen Lichtleitern 1 geeignet.

## Patentansprüche

1. Vorrichtung zum temporären lagedefinierten Fixieren von Lichtleiterenden (1) in einer Klemmeinrichtung (2) zur anschließenden Weiterbearbeitung der Lichtleiterenden (1) in einem Bearbeitungswerkzeug mit einer Fixiereinrichtung (3), wobei die Lichtleiterenden (1) in der Fixiereinrichtung (3) in einer Ebene parallel nebeneinander fixierbar sind und
wobei die Klemmeinrichtung (2) in eine Aufnahme (4) der Fixiereinrichtung (3) einsetzbar ist und durch Anschlagmittel (5) der Aufnahme (4) in eine definierte Lage zu den fixierten Lichtleiterenden (1) bringbar ist,
wobei die Lage der Anschlagmittel (5) zur Anpassung an eine unterschiedliche Anzahl von fixierten Lichtleiterenden (1) transversal zu diesen verstellbar ist, und
wobei die Fixiereinrichtung (3) und die Aufnahme (4) einander zugeordnete und aneinander anschlagbare Zentriermittel (6,16,17) aufweisen,
**dadurch gekennzeichnet,**
**daß** die Vorrichtung mehrere wechselbare Aufnahmen (4) aufweist, welche wechselweise in die Fixiereinrichtung (3) einsetzbar sind und
somit die Lage der Klemmeinrichtung (2) innerhalb der Fixiereinrichtung stufenweise variiert, so daß bei unterschiedlicher Zahl von Lichtleiterenden (1) die mittige Lage der Lichtleiterenden (1) innerhalb der Klemmeinrichtung (2) gewährleistet ist.

2. Vorrichtung zum temporären lagedefinierten Fixieren von Lichtleiterenden (1) nach Anspruch 1,
**dadurch gekennzeichnet,**
**daß** die verschiedenen Aufnahmen (4) in einem Zentrierkörper (7) vereint sind, der in unterschiedlichen Drehlagen in die Fixiereinrichtung (3) einsetzbar ist und
**daß** die Anschlagmittel (5) in den verschiedenen Drehlagen unterschiedliche Positionen aufweisen.

3. Vorrichtung zum temporären lagedefinierten Fixieren von Lichtleiterenden (1) nach einem der Ansprüche 1 oder 2,
**dadurch gekennzeichnet,**
**daß** die Fixiereinrichtung (3) mindestens einen Faserführungsschlitz (11) aufweist,
**daß** ein der Fixiereinrichtung (3) zugeordneter Faserschieber (12) vorgesehen ist, der in den mindestens einen Faserführungsschlitz (11) parallel in einer Ebene eingelegte Lichtleiterenden (1) in einer zueinander so eng benachbarten Position fixiert, daß sich die einzelnen eingelegten Lichtieiterenden (1) berühren.

4. Vorrichtung zum temporären lagedefinierten Fixieren von Lichtleiterenden (1) nach Anspruch 3,
**dadurch gekennzeichnet,**
**daß** der mindestens eine Faserführungsschlitz (11) in einem Sortierkamm (9) angeordnet ist, der zwischen zwei Positionen drehbar gelagert ist, so daß in einer ersten Position die Fasern im Faserführungsschlitz (11) fixiert werden und in einer zweiten Position in der Klemmeinrichtung (2) geklemmt werden.

## Claims

1. Apparatus for temporarily fixing light-guide ends (1) in a defined position in a clamping device (2) for the subsequent further processing of the light-guide ends (1) in a processing tool, having a fixing device (3), it being possible for the light-guide ends (1) to be fixed parallel one beside the other in one plane, and it being possible for the clamping device (2) to be inserted into a mount (4) of the fixing device (3) and to be brought into a defined position in relation to the fixed light-guide ends (1) by stop means (5) of the mount (4), it being possible, for adaptation to a different number of fixed light-guide ends (1), for the position of the stop means (5) to be adjusted transversely to said light-guide ends, and the fixing device (3) and the mount (4) having centring means (6, 16, 17) which are assigned to one another and can butt against one another, **characterized in that** the apparatus has a plurality of changeable mounts (4) which can be inserted alternately into the fixing device (3), and consequently the position of the clamping device (2) within the fixing device varies in a stepwise manner with the result that, with different numbers of light-guide ends (1), the central position of the light-guide ends (1) within the clamping device (2) is ensured.

2. Apparatus for temporarily fixing light-guide ends (1) in a defined position according to Claim 1, **characterized in that** the different mounts (4) are combined in one centring body (7) which can be inserted into the fixing device (3) in different rotary positions, and **in that** the stop means (5) are positioned differently in the different rotary positions.

3. Apparatus for temporarily fixing light-guide ends (1) in a defined position according to either of Claims 1 and 2, **characterized in that** the fixing device (3) has at least one fibre-guide slot (11), **in that** there is provided a fibre slide (12) which is assigned to the fixing device (3) and by means of which light-guide ends (1) fitted parallel in one plane into the at least one fibre-guide slot (11) are fixed in such a closely adjacent manner to one another that the individual light-guide ends (1) fitted therein are in contact with one another.

4. Apparatus for temporarily fixing light-guide ends (1) in a defined position according to Claim 3, **characterized in that** the at least one fibre-guide slot (11) is arranged in a comb-like sorting element (9) which is mounted rotatably between two positions, with the result that, in a first position, the fibres are fixed in the fibre-guide slot (11) and, in a second position, they are clamped in the clamping device (2).

## Revendications

1. Dispositif pour fixer de manière temporaire des extrémités de fibres optiques (1) dans une position définie dans un système de serrage (2) en vue d'un traitement ultérieur desdites extrémités de fibres optiques (1) dans un outil d'usinage, comprenant un système de fixation (3),
les extrémités de fibres optiques (1) pouvant être fixées dans un même plan parallèlement les unes aux autres dans le système de fixation (3) et
le système de serrage (2) pouvant être placé dans un logement (4) du système de fixation (3) et, grâce à des moyens de butée (5) dudit logement (4), être mis dans une position définie par rapport auxdites extrémités de fibres optiques (1) fixées,
la position des moyens de butée (5), pour l'adaptation à un nombre différent d'extrémités de fibres optiques (1) fixées, étant réglable transversalement par rapport à celles-ci, et
le système de fixation (3) et le logement (4) comprenant des moyens de centrage (6, 16, 17) affectés les uns aux autres et susceptibles de buter les uns contre les autres,
**caractérisé en ce que**
le dispositif comprend plusieurs logements (4) échangeables, lesquels peuvent être placés tour à tour dans le système de fixation (3), et **en ce que**,
en conséquence, la position du système de serrage (2) à l'intérieur du système de fixation varie successivement de telle sorte que, dans le cas d'un nombre différent d'extrémités de fibres optiques (1), la position centrée des extrémités de fibres optiques (1) à l'intérieur du système de serrage (2) soit assurée.

2. Dispositif pour fixer de manière temporaire des extrémités de fibres optiques (1) dans une position définie selon la revendication 1,
**caractérisé en ce que**
les différents logements (4) sont réunis dans un corps de centrage (7) lequel peut être placé dans différentes positions de rotation dans le système de fixation (3) et **en ce que**
les moyens de butée (5) présentent différentes positions dans lesdites différentes positions de rotation.

3. Dispositif pour fixer de manière temporaire des extrémités de fibres optiques (1) dans une position définie selon l'une des revendications 1 ou 2,
**caractérisé en ce que**
le système de fixation (3) comprend au moins une fente de guidage de fibres (11),
**en ce qu'**un coulisseau de fibres (12) associé au système de fixation (3) est prévu, qui fixe les extrémités de fibres optiques (1) insérées parallèlement dans un même plan dans ladite au moins une fente de guidage de fibres (11) dans des positions si proches l'une de l'autre que les différentes extrémités de fibres optiques (1) se touchent.

4. Dispositif pour fixer de manière temporaire des extrémités de fibres optiques (1) dans une position définie selon la revendication 3,
**caractérisé en ce que**
ladite au moins une fente de guidage de fibres (11) est agencée dans un peigne trieur (9) mobile entre deux positions de manière à ce que les fibres soient fixées dans la fente de guidage de fibres (11) dans une première position et enserrées dans le système de serrage (2) dans une deuxième position.
